Europäisches Patentamt

European Patent Office

Office européen des brevets

(19)

(11) Numéro de publication: **0 245 186 B1**

## (12) FASCICULE DE BREVET EUROPEEN

(45) Date de publication de fascicule du brevet:
13.11.91

(51) Int. Cl.⁵: **A01D 34/66**

(21) Numéro de dépôt: 87440023.7

(22) Date de dépôt: 30.04.87

(54) **Faucheuse.**

(30) Priorité: 02.05.86 FR 8606496

(43) Date de publication de la demande:
11.11.87 Bulletin 87/46

(45) Mention de la délivrance du brevet:
13.11.91 Bulletin 91/46

(84) Etats contractants désignés:
AT DE ES GB IT NL SE

(56) Documents cités:
EP-A- 0 009 134          DE-A- 2 816 144
FR-A- 1 558 695          FR-E- 89 970
GB-A- 1 366 072          GB-A- 2 089 634

(73) Titulaire: **KUHN S.A.**
**4, Impasse des Fabriques**
**F-67700 Saverne(FR)**

(72) Inventeur: **Neuerburg, Horst**
**6, rue des Aubépines**
**F-67700 Saverne(FR)**
Inventeur: **Jürgens, Jean-Marc**
**36, rue Saint-Michel**
**Monswiller F-67700 Saverne(FR)**

## Description

La présente invention concerne une faucheuse comportant un châssis supportant au moyen d'organes de liaison au moins un organe de coupe rotatif muni d'outils de coupe et surmonté par un tambour rotatif tournant autour d'un axe dirigé vers le haut et qui est muni d'une enveloppe, une partie au moins desdits organes de liaison pénétrant à l'intérieur dudit tambour rotatif en traversant la partie supérieure de celui-ci, un espace formant jeu étant prévu directement entre ladite partie supérieure du tambour rotatif et les organes de liaison, et un dispositif d'entraînement dudit organe de coupe et dudit tambour comprenant un arbre et un moyeu lié en rotation à l'arbre et sur lequel sont fixés l'organe de coupe et le tambour rotatif, ledit arbre et ledit moyeu s'étendant en partie au moins à l'intérieur du tambour, tandis que ladite partie des organes de liaison pénétrant dans le tambour est liée à l'arbre de l'organe de coupe.

On connaît une telle faucheuse (EP-A-0 009 134 ou GB-A-20 89 634) qui comporte une pluralité d'organes de coupe guidés en rotation à la face supérieure d'un carter. L'organe de coupe situé à chaque extrémité du carter est surmonté par un tambour rotatif d'un certain volume. Le dispositif d'entraînement des organes de coupe et des tambours rotatifs, et une partie des organes de liaison qui lient le carter et les organes de coupe au châssis, pénètrent à l'intérieur du premier tambour en traversant la partie supérieure de celui-ci. Une autre partie des organes de liaison qui lient le carter et les organes de coupe au châssis, pénètre à l'intérieur du second tambour en traversant également la partie supérieure de celui-ci. Les tambours de ces faucheuses connues sont réalisés par formage et s'étendent librement vers le haut à partir de leur organe de coupe correspondant sur lequel ils sont fixés par soudure. Compte tenu des tolérances de fabrication nécessaires lors du formage de l'enveloppe des tambours, compte tenu des déformations et/ou des mauvais positionnements des tambours par rapport à leur organe de coupe correspondant lors de la soudure et compte tenu des déformations auxquelles peuvent être soumis les tambours lors d'un choc pendant le travail, il peut arriver que la partie supérieure des tambours soit largement désaxée par rapport aux organes de liaison qui la traversent.

Comme les organes de liaison sont fixes et que les tambours à l'intérieur desquels pénètre une partie au moins de ces organes de liaison sont rotatifs, il a été nécessaire d'aménager entre les organes de liaison et la partie supérieure des tambours, un certain espace pour éviter, dans tous les cas, que la partie supérieure des tambours ne vienne en contact avec la partie des organes de liaison pénétrant à l'intérieur des tambours.

Lorsque ces faucheuses connues travaillent, les deux tambours, surmontant les organes de coupe extérieurs, évitent d'une part l'accrochage de fourrage coupé au dispositif d'entraînement et/ou aux organes de liaison et d'autre part andainent le fourrage coupé pour réduire la largeur de l'andain laissé par lesdites faucheuses. Le fourrage qui est déplacé par les tambours, monte le long des tambours et une partie de celui-ci arrive à pénétrer à l'intérieur des tambours par l'espace aménagé entre les organes de liaison et la partie supérieure des tambours. Par ailleurs, on trouve également à l'intérieur des tambours des graines de fourrage et de la poussière de terre.

Sous l'effet de la vitesse très élevée des tambours, ces débris végétaux et cette poussière s'accumulent sur la paroi interne des tambours pour finalement former une masse très compacte et relativement lourde qui provoque des balourds très importants.

Ces balourds augmentent substantiellement la charge sur les paliers qui guident en rotation les organes de coupe que surmontent les tambours et réduisent de ce fait substantiellement la durée de vie de ces paliers.

En sus, cette accumulation de débris végétaux et de poussière de terre forme une masse très abrasive qui use rapidement les organes de liaison.

Ces phénomènes sont d'ailleurs d'autant plus importants que le volume des tambours est grand.

On a alors cherché divers moyens pour empêcher les débris végétaux et la poussière de pénétrer à l'intérieur des tambours rotatifs par l'espace existant entre la partie supérieure des tambours et la partie des organes de liaison pénétrant dans lesdits tambours en traversant ladite partie supérieure. De tels moyens font par exemple l'objet des demandes de brevet EP-A-0 213 052 et EP-A-0 240 086.

Ces moyens ont certes apporté des améliorations substantielles. Néanmoins, il a pu être rencontré des conditions de travail dans certains pays (terres très sèches notamment) où on a toujours constaté, au bout d'un certain temps de travail, un remplissage des tambours avec de la poussière notamment.

Sur une faucheuse commercialisée, on a même abandonné la solution des organes de liaison traversant la partie supérieure du tambour extérieur qui est le plus exposé au phénomène, pour revenir à la solution classique du tambour extérieur complètement fermé et de l'organe de liaison sous forme de bras qui s'étend derrière le tambour de l'organe de coupe extérieur. Cette solution possède des inconvénients dans certaines conditions de travail, car du fourrage coupé peut rester accroché audit bras de liaison et provoquer des bourrages.

Le but de la présente invention est de solutionner le problème de remplissage, par des débris végétaux et de la poussière, des tambours des faucheuses surmontant des organes de coupe et étant pénétrés par des organes de liaison liant lesdits organes de coupe à un châssis, alors qu'un espace formant jeu est prévu entre lesdits organes de liaison et la partie supérieure des tambours.

Dans ce but, la faucheuse selon l'invention est caractérisée par le fait que l'enveloppe du tambour rotatif, dont la partie supérieure est traversée par des organes de liaison, soit formée par des montants séparés les uns des autres par des espaces et liés entre eux à leur partie inférieure par un organe de raccord inférieur et à leur partie supérieure par un organe de raccord supérieur.

Grâce à cet agencement, il ne peut plus se former de masse très compacte, relativement lourde et très abrasive constituée de débris végétaux et de poussière à l'intérieur des tambours rotatifs surmontant les organes de coupe d'une faucheuse et dont la partie supérieure est traversée par des organes de liaison liant lesdits organes de coupe au châssis.

En effet, alors que dans les faucheuses de l'art antérieur, on essayait, par tous les moyens, de rendre le tambour le plus étanche possible pour empêcher les débris végétaux et la poussière de pénétrer à l'intérieur du tambour, dans la faucheuse selon l'invention, on permet aux débris végétaux et à la poussière de pénétrer à l'intérieur du tambour. Mais on permet également auxdits débris végétaux et à ladite poussière de ressortir dudit tambour, sous l'effet de la force centrifuge. Ainsi, lesdits débris végétaux et ladite poussière ne pourront plus former une grande masse compacte, lourde et abrasive provoquant des balourds très importants et usant les organes de liaison qui s'étendent à l'intérieur du tambour.

La durée de vie des paliers guidant en rotation les organes de coupe que surmontent les tambours et la durée de vie des organes de liaison pénétrant à l'intérieur des tambours et liant les organes de coupe au châssis, sont ainsi substantiellement augmentées.

Du reste, si des brins de fourrage coupé devaient de temps en temps rester accrochés à l'intérieur du tambour, l'utilisateur de la machine n'aura aucune difficulté à sortir ces brins du tambour puisqu'il peut facilement accéder à l'intérieur du tambour.

On connaît une faucheuse (FR-A-1 558 695) dont les organes de coupe sont formés par des tambours de fauchage en forme de cage, dans le but de diminuer la masse tournante desdits tambours et de frapper les végétaux coupés afin de leur faire subir un écrasement bénéfique. Les tambours de fauchage de cette faucheuse connue ne sont cependant pas pénétrés par des organes de liaison.

On connaît une autre faucheuse (GB-A-1 366 072) dont les organes de coupe sont également formés par des tambours de fauchage en forme de cage. Dans cette faucheuse connue, les organes de liaison s'étendent à l'intérieur d'un arbre creux tournant de sorte qu'il n'existe pas d'espace formant jeu directement entre lesdits organes de liaison et la partie supérieure du tambour.

Selon une caractéristique supplémentaire de l'invention, la largeur des espaces, aménagés entre les montants, est au moins sensiblement égale à la largeur des montants. La sortie des débris végétaux et de la poussière qui sont arrivés à pénétrer à l'intérieur du tambour, est ainsi facilitée.

Selon une autre caractéristique supplémentaire de l'invention, la face interne des montants est constituée par une surface convexe dont le centre du cercle circonscrit est situé en dehors du volume du tambour. Avantageusement, ladite face interne des montants est une surface courbe. L'adhérence des débris végétaux et de la poussière qui ont pénétré à l'intérieur du tambour, à la face interne des montants est ainsi sensiblement inexistante. En effet, une telle face interne est, compte tenu de la vitesse de rotation élevée des tambours, sensiblement autonettoyante.

Selon une autre caractéristique supplémentaire de l'invention, l'un au moins des organes de raccord est constitué par le moyeu lié en rotation à l'arbre de l'organe de coupe et du tambour qui surmonte ce dernier, et sur lequel sont fixés ledit organe de coupe et le tambour correspondant.

Avantageusement, c'est l'organe de raccord inférieur qui est constitué par le moyeu. Grâce à cette caractéristique, il est possible d'avoir un tambour dont l'organe de raccord supérieur est sensiblement rigoureusement concentrique avec le moyeu. En effet, l'alésage de l'organe de raccord supérieur au travers duquel les organes de liaison pénètrent à l'intérieur du tambour et l'alésage du moyeu peuvent être usinés de manière précise. De même, la partie des organes de liaison s'étendant dans le voisinage de l'organe de raccord supérieur, peut également être usinée sensiblement concentriquement avec le palier par l'intermédiaire duquel l'arbre de l'organe de coupe est lié aux organes de liaison. Du reste, la partie supérieure du tambour est très rigide et ne se déforme donc pratiquement pas sous l'effet des chocs qui peuvent apparaître au travail. Ces usinages précis et cette rigidité permettent ainsi de réduire l'espace formant jeu directement entre l'organe de raccord supérieur et la partie des organes de liaison s'étendant dans le voisinage dudit organe de raccord supérieur, et de créer ainsi une bonne chicane entre ces divers organes. Ceci diminue ainsi le risque d'enroulements de brins de fourrage coupé autour des organes de liaison dans le voisinage de l'organe de raccord supérieur.

Selon une autre caractéristique supplémentaire de l'invention, l'arête frontale des montants est, compte tenu du sens de rotation du tambour, munie d'une pièce de protection amovible. Avantageusement, cette pièce de protection entoure l'arête frontale des montants. Cette caractéristique permet de protéger l'arête frontale des montants qui est l'emplacement des montants le plus sollicité. Cette pièce de protection amovible permet ainsi d'avoir une arête d'attaque des montants toujours convenable en changeant simplement ladite pièce de protection si elle est usée ou endommagée, sans avoir à démonter le tambour.

Selon une autre caractéristique supplémentaire de l'invention, une partie au moins des montants est munie d'entraîneurs de fourrage amovibles. Les tambours ont ainsi un pouvoir d'entraînement accru. L'amovibilité des entraîneurs permet de changer ceux-ci lorsqu'ils sont usés ou endommagés ou de les enlever lorsque les conditions le nécessitent.

Selon une autre caractéristique de l'invention, l'organe de coupe, surmonté par un tambour, est constitué par au moins deux segments qui sont fixés de manière démontable à l'organe de raccord inférieur dudit tambour. Grâce à cette caractéristique, l'organe de coupe surmonté par un tambour peut être changé sans qu'il soit nécessaire de démonter le tambour, le moyeu et le carter de la faucheuse.

D'autres caractéristiques de l'invention sont contenues dans les autres sous-revendications et dans la description ci-dessous de deux exemples non limitatifs de réalisation de l'invention en référence au dessin annexé sur lequel :

- la figure 1 représente une vue partielle de l'arrière dans le sens de travail partiellement en coupe d'une faucheuse selon l'invention,
- La figure 2 représente une vue de face du premier organe de coupe de la faucheuse de la figure 1, surmonté de son tambour,
- La figure 3 représente une vue de dessus, partiellement en coupe suivant le plan III-III, de l'organe de coupe et du tambour de la figure 2,
- La figure 4 représente une vue de face en coupe d'un autre exemple de réalisation du tambour du premier organe de coupe de la faucheuse de la figure 1,
- La figure 5 représente une vue de dessus, partiellement en coupe suivant le plan V-V, de l'organe de coupe et du tambour de la figure 4.

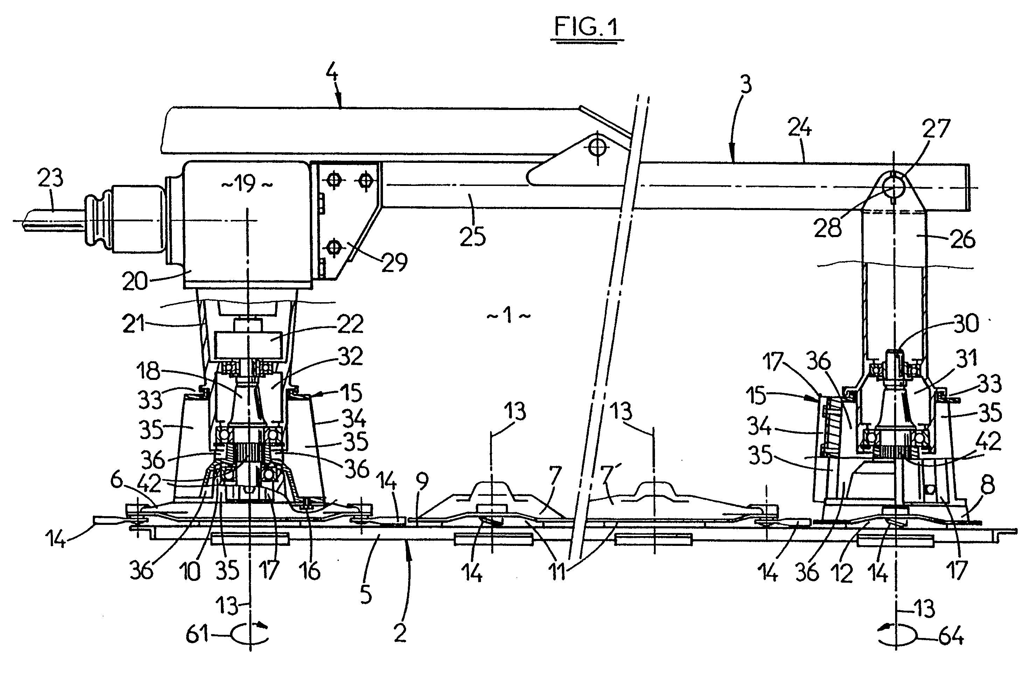

La faucheuse (1) de la figure 1 comporte une barre de coupe (2) qui est liée à l'aide d'organes de liaison (3) à un châssis (4).

La barre de coupe (2) se compose d'un carter (5) qui supporte un certain nombre d'organes de coupe (6, 7, 7', 8). Ces organes de coupe (6, 7, 7', 8) s'étendent à la face supérieure (9) du carter (5). Chaque organe de coupe (6, 7, 7', 8) est guidé en rotation dans un palier à roulements (10, 11, 12) fixé sur la face supérieure (9) du carter (5). Les organes de coupe (6, 7, 7', 8) tournent autour d'axes (13) dirigés vers le haut et de préférence sensiblement verticaux.

Chaque organe de coupe (6, 7, 7', 8) est muni d'un certain nombre d'outils de coupe (14). Les deux organes de coupe extrêmes (6, 8) sont surmontés par un tambour (15). Les organes de coupe (6, 8) sont fixés à leur tambour (15) respectif au moyen de vis (16). Ces tambours (15) tournent ainsi avec leur organe de coupe (6, 8) respectif et servent à réduire la largeur de l'andain de fourrage coupé, déposé derrière la barre de coupe (2). A cet effet, ils sont munis d'entraîneurs (17, 171).

L'entraînement en rotation des organes de coupe (6, 7, 7', 8) est produit par des éléments d'entraînement non représentés, logés d'une manière connue de l'homme de l'art, à l'intérieur du carter (5) de la barre de coupe (2). L'entraînement en rotation desdits éléments d'entraînement est réalisé par l'arbre (18) du premier organe de coupe (6). A cet effet, l'arbre (18) est prolongé vers le haut et pénètre dans un dispositif de transmission (19) comportant un boîtier (20) et un fût (21) s'étendant à partir du boîtier (20) vers le bas en direction du premier organe de coupe (6). L'arbre (18) traverse ainsi la partie supérieure du tambour (15) surmontant le premier organe de coupe (6). Le boîtier (20) contient, d'une manière connue de l'homme de l'art, des organes de transmission qui sont couplés à l'extrémité supérieure de l'arbre (18) du premier organe de coupe (6) au moyen d'un accouplement élastique (22). Les organes de transmission logés à l'intérieur du dispositif de transmission (19) sont eux-mêmes entraînes en rotation par un arbre à joints universels (23) accouplé, d'une manière connue de l'homme de l'art, à la prise de force du véhicule tracteur non représenté auquel est couplée la faucheuse pendant le travail.

A une certaine distance au-dessus du carter (5) de la barre de coupe (2) s'étend une structure support (24) qui est un des organes de liaison (3). Cette structure support (24) se compose d'un longeron (25) et d'une jambe (26). Le longeron (25) s'étend sensiblement parallèlement au carter (5) tandis que la jambe (26) s'étend vers le bas en direction de l'organe de coupe extérieur (8). Le longeron (25) et la jambe (26) s'étendent ainsi sensiblement dans le plan contenant les axes de rotation (13) des organes de coupe (6, 7, 7', 8).

La liaison entre le longeron (25) et la jambe (26) est réalisée au moyen d'une articulation cylindrique (27) dont l'axe (28) est sensiblement perpendiculaire au plan contenant les axes de rotation (13) des organes de coupe (6, 7, 7', 8).

L'extrémité du longeron (25) éloignée de la jambe (26), est fixée sur le boîtier (20) au moyen d'un dispositif de fixation (29).

Le fût (21), le boîtier (20), le longeron (25) et la jambe (26) constituent ainsi les organes de liaison (3) qui lient la barre de coupe (2) au châssis (4) de la faucheuse (1).

La liaison de la barre de coupe (2) aux organes de liaison (3) s'opère au moyen de l'arbre (18) du premier organe de coupe (6) et de l'arbre (30) de l'organe de coupe extérieur (8). A cet effet, l'arbre (30) de l'organe de coupe extérieur (8) est prolongé vers le haut et pénètre à l'intérieur de la jambe (26). L'arbre (30) s'étend ainsi en partie à l'intérieur du tambour (15) surmontant l'organe de coupe extérieur (8) et traverse la partie supérieure dudit tambour (15). La liaison entre la jambe (26) et la partie supérieure de l'arbre (30) est réalisée au moyen d'un palier (31) qui, d'une part, guide en rotation la partie supérieure de l'arbre (30) de l'organe de coupe extérieur (8) dans la jambe (26) et qui, d'autre part, lie axialement ladite partie supérieure de l'arbre (30) à la jambe (26). L'arbre (18) du premier organe de coupe (6) est quant-à-lui lié au fût (21) du dispositif de transmission (19) au moyen d'un palier (32) qui, d'une part, guide en rotation l'arbre (18) dans le fût (21) et qui, d'autre part, lie axialement ledit arbre (18) audit fût (21).

Sur la figure 1, on n'a représenté qu'une partie du châssis (4) qui est lié à l'une de ses extrémités aux organes de liaison (3) et qui comporte à son autre extrémité une structure non représentée mais à la portée de l'homme de l'art, permettant de lier le châssis (4) à l'attelage du véhicule tracteur non représenté auquel est couplée la faucheuse.

Sur la figure 1, on voit encore que le tambour (15) surmontant le premier organe de coupe (6), respectivement le tambour (15) surmontant l'organe de coupe extérieur (8), forment une chicane (33) avec le fût (21), respectivement la jambe (26), qui traversent la partie supérieure des tambours (15) et pénètrent à l'intérieur desdits tambours (15). Les tambours (15) ont par ailleurs selon l'invention, une structure particulière. En effet, leur enveloppe (34) est formée par des montants (35) séparés l'un de l'autre par des espaces (36).

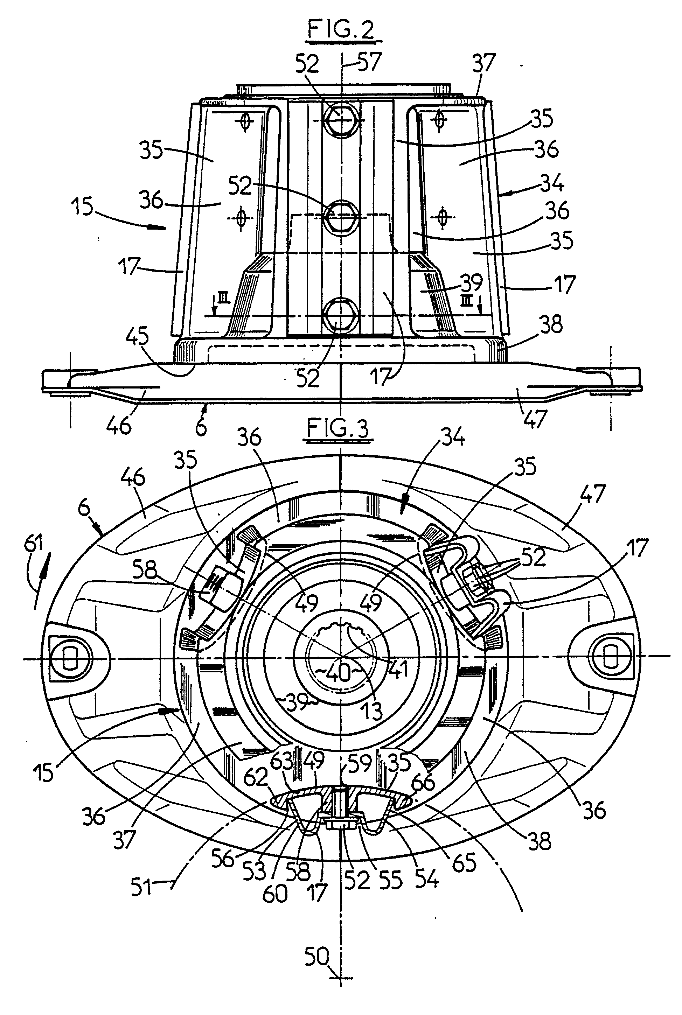

Cette structure des tambours (15) sera maintenant décrite ci-dessous à l'aide de deux exemples de réalisation représentés sur les figures 2 à 6. Les tambours (15) de ces deux exemples de réalisation ont une structure très voisine l'une de l'autre, de sorte que les éléments sensiblement identiques seront désignés par les mêmes repères. Du reste, pour une bonne compréhension des figures 3 et 5 et pour permettre une description correcte des différents organes, on a représenté un montant nu, un montant avec son entraîneur monté vus de l'extérieur et un montant avec son entraîneur monté vus en coupe.

Comme dit plus haut, les tambours (15) surmontant les organes de coupe (6, 8) comportent une enveloppe (34) qui est formée par des montants (35) séparés les uns des autres par des espaces (36). Dans les exemples de réalisation représentés, le nombre des montants est de trois. Ce nombre pourra cependant, dans le cadre de l'invention, être différent de trois. Préférentiellement cependant, la largeur des espaces (36) séparant les montants (35) est au moins sensiblement égale à la largeur des montants (35).

Les montants (35) sont liés entre eux à leur partie supérieure par un organe de raccord supérieur (37) et à leur partie inférieure par un organe de raccord inférieur (38). Dans les exemples représentés, l'organe de raccord inférieur (38) est constitué par le moyeu (39) qui s'étend en partie au moins à l'intérieur du tambour (15) et par l'intermédiaire duquel le tambour (15) et l'organe de coupe (6, 8) correspondant sont liés à l'arbre (18, 30) correspondant. Cette liaison comporte notamment une liaison en rotation de sorte que les arbres (18, 30) puissent entraîner en rotation leur organe de coupe (6, 8) et leur tambour (15) correspondant. A cet effet, l'alésage (40) du moyeu (39) des tambours (15) est muni de cannelures (41) qui collaborent avec des cannelures (42) aménagées sur les arbres (18, 30) correspondants.

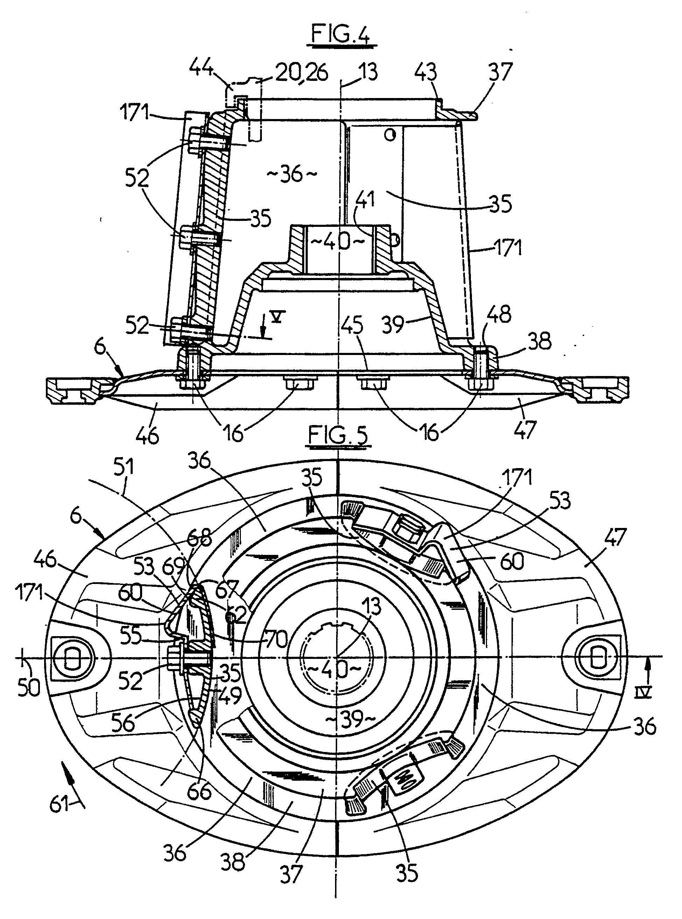

L'organe de raccord inférieur (38) ou moyeu (39), les montants (35) et l'organe de raccord supérieur (37) forment ainsi une seule pièce qui peut par exemple être réalisée par moulage. L'avantage de ce mode de réalisation réside dans le fait que la partie (43) de l'organe de raccord supérieur (37) s'étendant dans le voisinage du fût (21) ou de la jambe (26) (représentés partiellement en traits mixtes sur la figure 4) qui traversent la partie supérieure des tambours (15), peut être usinée très précisément de sorte que le jeu entre ladite partie (43) de l'organe de raccord supérieur (37) et le fût (21) ou la jambe (26) puisse être le plus petit possible. La partie (43) de l'organe de raccord supérieur (37) peut ainsi former avec le fût (21) ou la jambe (26) une chicane (33). A cet effet, le fût (21) et la jambe (26) comportent un décrochement (44) usiné dans lequel pénètre partiellement la partie (43) de l'organe de raccord supérieur (37). On diminue ainsi les risques d'enroulement de brins de fourrage coupé.

A la face inférieure (45) de l'organe de raccord inférieur (38) est fixé l'organe de coupe (6, 8) correspondant. Chaque organe de coupe (6, 8) est formé par deux segments (46, 47). Chaque segment (46, 47) est fixé sur la face inférieure (45) de l'organe de raccord inférieur (38) au moyen des vis (16) qui sont vissées dans des trous filetés (48) aménagés dans l'organe de raccord inférieur (38). Grâce à cet agencement, les segments (46, 47) des organes de coupe (6, 8) peuvent être facilement remplacés lorsqu'ils sont usés ou endommagés sans qu'il soit nécessaire de démonter la barre de coupe (2) ou les tambours (15).

La forme des montants (35) et plus spécialement leur section transversale apparaît clairement sur les figures 3 et 5. On voit en effet, que la face interne (49) des montants (35) est constituée par une surface convexe dont le centre (50) du cercle circonscrit (51) est situé en dehors du volume du tambour (15). Préférentiellement, cette face interne (49) est une surface courbe. Grâce à cet agencement, les débris végétaux et la poussière qui ont pénétré à l'intérieur du tambour (15) par les espaces (36) séparant les montants (35), ne peuvent sensiblement pas adhérer à la face interne (49) des montants (35).

Comme dit plus haut, les montante (35) sont munis d'entraîneurs (17, 171).

Une première forme de réalisation de tels entraîneurs est représentée sur les figures 2 et 3. Comme visible, les entraîneurs (17) sont fixés sur leur montant (35) correspondant au moyen de vis (52) de sorte qu'ils puissent être remplacés lorsqu'ils sont usée ou endommagés, ou enlevés lorsque les conditions de travail le nécessitent.

En section transversale, on voit que chaque entraîneur (17) comporte une forme générale de W ayant deux ailes extérieures (53, 54) liées entre elles par un décrochement (55). La partie ouverte du W est logée dans une rainure (56) que comporte le face externe (69) du montant (35), laquelle s'étend sensiblement parallèlement à l'axe longitudinal (57) dudit montant (35). Dans ce décrochement (55) liant les deux ailes (53, 54) de l'entraîneur (17), se logent les têtes des vis (52) qui lient l'entraîneur (17) au montant (35), lequel comporte à cet effet un bossage (58) sur lequel repose le décrochement (55) et qui comporte des trous filetés (59) dans lesquels sont vissées les vis (52). Grâce au décrochement (55), les têtes des vis (52) sont ainsi efficacement protégées par les ailes (53, 54) contre l'usure et/ou les chocs.

Du reste, le fait que les extrémités libres des ailes (53, 54) de l'entraîneur (17) soient logées dans la rainure (56) du montant (35), permet d'éviter que lesdites extrémités des ailes (53, 54) ne restent accrochées à un obstacle, ce qui pourrait provoquer la déformation desdites ailes.

Afin de pouvoir remplir correctement leur fonction d'entraînement du fourrage coupé, la face frontale (60) de l'aile frontale (53) des entraîneurs (17) est dirigée vers l'arrière, compte tenu du sens de rotation (61) du premier organe de coupe (6) et de son tambour (15) correspondant.

Du reste, pour conférer aux tambours (15) une durée de vie convenable, l'arête frontale (62) des montants (35) est plus épaisse que la partie centrale (63) desdits montants. Ceci confère à l'arête frontale (62) une bonne résistance aux chocs auxquels elle peut être soumise pendant le travail.

Sur la figure 3, on voit en sus que chaque montant (35) et son entraîneur (17) sont sensiblement symétriques par rapport au plan contenant l'axe (13) du tambour (15) et l'axe longitudinal (57) dudit montant (35). De cette sorte, le tambour (15) peut indifféremment surmonter le premier organe de coupe (6) qui tourne dans le sens (61), ou l'organe de coupe extérieur (8) qui tourne dans le sens opposé (64). En effet, avec cet agencement, la face (65) de l'aile (54) est également dirigée vers l'arrière, compte tenu du sens de rotation (64) du tambour (15), lorsque celui-ci surmonte l'organe de coupe extérieur (8). De même, l'arête (66) des montants (35) est également plus épaisse que la partie centrale (63) et pourra donc également bien résister aux chocs.

Une deuxième forme de réalisation des entraîneurs est représentée sur les figures 4 et 5.

Dans cet exemple de réalisation, le tambour (15) est identique à celui décrit prédédemment, sauf en ce qui concerne les entraîneurs (171) qui comportent tout de même des parties identiques à certaines parties des entraîneurs (17). Ainsi, les entraîneurs (171) sont également fixés sur leur montant (35) correspondant au moyen de vis (52) vissées dans les trous filetés (59) aménagés dans le bossage (58) du montant (35). De même, ces entraîneurs (171) comportent également un décrochement (55) dans lequel sont logées les têtes des vis (52). Lesdites têtes sont donc également efficacement protégées contre l'usure ou les chocs. Enfin, les entraîneurs (171) comportent également une aile frontale (53) dont la face frontale (60) est dirigée vers l'arrière, compte tenu du sens de rotation (61) de l'organe de coupe (6) surmonté par ledit tambour (15).

Sur la figure 5, on voit que l'arête frontale (62) des montants (35) est munie d'une pièce de protection (67). La fonction de cette pièce de protection (67) est d'éviter l'usure de l'arête frontale (62) des montants (35). Pour ce faire, cette pièce de protection (67) entoure l'arête frontale (62) et couvre même une partie de la face interne (49) du montant (35). A cet effet, la pièce de protection (67) comporte une aile extérieure (68) qui couvre au moins la partie de la face externe (69) du montant (35) située dans le voisinage de l'arête frontale (62), et une aile intérieure (70) qui couvre au moins la partie de la face interne (49) du montant (35) située dans le voisinage de l'arête frontale (62), en épousant sensiblement la forme de ladite face interne (49).

Dans l'exemple représenté, la pièce de protection (67) et l'entraîneur (171) forment une seule pièce. De ce fait, la pièce de protection (67) est également fixée sur le montant (35) au moyen des vis (52) pour qu'elle puisse être remplacée en cas d'usure. Dans l'invention, on pourra également avoir des entraîneurs (171) et des pièces de protection (67) séparés, montés sur un même montant (35), ou même avoir des montants (35) uniquement munis de pièces de protection (67). Dans tous ces cas cependant, lesdites pièces de protection (67) seront montées de manière amovible sur leur montant (35).

Dans les figures 4 et 5, on a représenté le premier organe de coupe (6) qui tourne dans le sens (61). Dans le cas de l'organe de coupe extérieur (8) qui tourne dans le sens opposé (64), l'entraîneur (171) et la pièce de protection (67) seront différents de ceux du premier organe de coupe (6). En effet, cet entraîneur (171) aura une face frontale qui s'étendra du côté de l'arête (66) des montants (35), et la pièce de protection (67) couvrira ladite arête (66).

On voit encore dans les figures 2 et 4 que les entraîneurs (17, 171) et les pièces de protection (67) s'étendent sensiblement sur .toute la hauteur des tambours (15).

Alors que dans les exemples représentés chaque montant (35) est muni d'un entraîneur (17, 171), on pourra dans le cadre de l'invention n'avoir qu'une partie des montants (35) qui soient munis d'entraîneurs (17, 171).

Diverses modifications peuvent être apportées aux exemples de réalisation décrits sans qu'on ne sorte pour autant du cadre de la présente invention tel que défini dans les revendications suivantes.

**Revendications**

1. Faucheuse (1) comportant un châssis (4) supportant au moyen d'organes de liaison (3) au moins un organe de coupe rotatif (6, 8) muni d'outils de coupe (14) et surmonté par un tambour rotatif (15) tournant autour d'un axe (13) dirigé vers le haut et qui est muni d'une enveloppe (34), une partie (21, 26) au moins desdits organes de liaison (3) pénétrant à l'intérieur dudit tambour rotatif (15) en traversant la partie supérieure de celui-ci, un espace formant jeu étant prévu directement entre ladite partie supérieure du tambour rotatif (15) et les organes de liaison (3), et un dispositif d'entraînement dudit organe de coupe (6, 8) et dudit tambour (15) comprenant un arbre (18, 30) et un moyeu (39) lié en rotation à l'arbre (18, 30) et sur lequel sont fixés l'organe de coupe (6, 8) et le tambour rotatif (15), ledit arbre (18, 30) et ledit moyeu (39) s'étendant en partie au moins à l'intérieur du tambour (15), tandis que ladite partie (21, 26) des organes de liaison (3) pénétrant dans le tambour (15) est liée à l'arbre (18, 30) de l'organe de coupe (6, 8), caractérisée par le fait que l'enveloppe (34) du tambour rotatif (15) est formée par des montants (35) séparés les uns des autres par des espaces (36) et liés entre eux à leur partie inférieure par un organe de raccord inférieur (38) et à leur partie supérieure par un organe de raccord supérieur (37).

2. Faucheuse selon la revendication 1, caractérisée par le fait que la largeur des espaces (36), aménagés entre les montants (35), est au moins sensiblement égale à la largeur de montants (35).

3. Faucheuse selon l'une des revendications 1 ou 2, caractérisée par le fait que la face interne (49) des montants (35) est constituée par une surface convexe dont le centre (50) du cercle circonscrit (51) est situé en dehors du volume du tambour (15).

4. Faucheuse selon la revendication 3, caractérisée par le fait que la face interne (49) des montants (35) est une surface courbe.

5. Faucheuse selon l'une au moins des revendications 1 à 4, caractérisée par le fait que l'un au moins des organes de raccord (37, 38) est constitué par le moyeu (39).

6. Faucheuse selon la revendication 5, caractérisée par le fait que l'organe de raccord inférieur (38) est constitué par le moyeu (39).

7. Faucheuse selon l'une au moins des revendications 1 à 6, caractérisée par le fait qu'au niveau de l'espace formant jeu directement entre la partie supérieure du tambour rotatif (15) et les organes de liaison (3), l'organe de raccord supérieur (37) forme une chicane (33) avec ladite partie (21, 26) des organes de liaison (3) pénétrant à l'intérieur du tambour (15).

8. Faucheuse selon l'une au moins des revendications 1 à 7, caractérisée par le fait que l'arête frontale (62) ou (66) des montants (35) est, compte tenu du sens de rotation (61) ou (64) du tambour (15), munie d'une pièce de protection (67) amovible.

9. Faucheuse selon la revendication 8, caractérisée par le fait que la pièce de protection (67) entoure l'arête frontale (62) ou (66) des montants (35).

10. Faucheuse selon la revendication 9, caractérisée par le fait que la pièce de protection (67) comporte une aile extérieure (68) qui couvre au moins la partie de la face externe (69) du montant (35) situé dans le voisinage de l'arête frontale (62) ou (66), et une aile intérieure (70) qui couvre au moins la partie de la face interne (49) du montant (35) situé dans le voisinage de l'arête frontale (62) ou (66).

11. Faucheuse selon la revendication 10, caractérisée par le fait que l'aile intérieure (70) de la pièce de protection (67) épouse sensiblement la forme de la partie de la face interne (49) du montant (35) qu'elle couvre.

12. Faucheuse selon l'une au moins des revendications 1 à 11, caractérisée par le fait qu'une partie au moins des montants (35) est munie d'entraîneurs (17, 171) amovibles.

13. Faucheuse selon la revendication 12 et l'une au moins des revendications 8 à 11, caractérisée par le fait que l'entraîneur (171) et la pièce de protection (67) sont constitués par une seule pièce.

14. Faucheuse selon la revendication 13, caractérisée par le fait que la face externe (69) du montant (35) qui est muni d'un entraîneur (17), comporte une rainure (56) s'étendant au moins sensiblement parallèlement à l'axe longitudinal (57) du montant (35), dans laquelle se loge partiellement l'entraîneur (17 ; 171).

15. Faucheuse selon l'une des revendications 12 à 14, caractérisée par le fait que la face frontale (53) ou (54) de l'entraîneur (17 ; 171) est dirigée obliquement vers l'arrière, compte tenu du sens de rotation (61) ou (64).

16. Faucheuse selon l'une au moins des revendications 8 à 15, caractérisée par le fait que les éléments de fixation (52) qui fixent l'entraîneur (17 ; 171) et/ou la pièce de protection (67) sur le montant (35), sont logés dans un décrochement (55) de l'entraîneur (17 ; 171) et/ou de la pièce de protection (67) et sont protégés par la face frontale (53) ou (54) de l'entraîneur (17 ; 171) et/ou de la pièce de protection (67).

17. Faucheuse selon l'une au moins des revendications 1 à 16, caractérisée par le fait que l'arête frontale (62) ou (66) du montant (35) est plus épaisse que la partie centrale (63) dudit montant (35).

18. Faucheuse selon l'une au moins des revendications 1 à 17, caractérisée par le fait que le montant (35) est sensiblement symétrique par rapport au plan contenant son axe longitudinal (57) et l'axe de rotation (13) du tambour (15).

19. Faucheuse selon la revendication 12 ou l'une au moins des revendications 14 à 18 dans leur dépendance à la revendication 12, caractérisée par le fait que l'entraîneur (17) est sensiblement symétrique par rapport au plan contenant l'axe de rotation (13) du tambour (15) et l'axe longitudinal (57) du montant (35).

20. Faucheuse selon l'une au moins des revendications 8 à 19, caractérisée par le fait que l'entraîneur (17 ; 171) et/ou la pièce de protection (67) s'étendent sensiblement sur toute la hauteur du tambour (15).

21. Faucheuse selon l'une au moins des revendications 1 à 20, caractérisée par le fait que l'organe de coupe (6, 8) est constituée par au moins deux segments (46, 47) qui sont fixés de manière démontable à l'organe de raccord inférieur (38) du tambour (15).

**Claims**

1. A mower (1) comprising a chassis (4) supporting by means of connecting elements (3) at least one rotating cutter member (6, 8) equipped with cutting tools (14) and surmounted by a rotating drum (15) turning around an axis (13) directed upwards and which is equipped with a covering (34), one part (21, 26) at least of said connecting elements (3) penetrating into the inside of said rotating drum (15) by crossing the upper part of it, a space forming play being foreseen directly between said upper part of the rotating drum (15) and the connecting elements (3), and a drive arrangement for said cutter element (6, 8) and for said drum (15) comprising a shaft (18, 30) and a hub (39) connected in rotation to the shaft (18, 30) and on which are fixed the cutter element (6, 8) and the rotating drum (15), said shaft (18, 30) and said hub (39) extending in part at least into the inside of the drum (15), while said part (21, 26) of the connecting elements (3) penetrating inside the drum (15) is connected to the shaft (18, 30) of the cutter member (6, 8), characterised in that the covering (34) of the rotating drum (15) is formed from uprights (35) separated the one from the other by spaces (36) and connected together at their lower part by a lower connecting member (38) and at their upper part by an upper connecting member (37).

2. A mower in accordance with Claim 1, characterised in that the width of the spaces (36), arranged between the uprights (35), is at least approximately equal to the width of the uprights (35).

3. A mower in accordance with either Claim 1 or 2, characterised in that the internal surface (49) of the uprights (35) is made up from one convex surface of which the centre (50) of the circumscribed circle (51) is situated outside the volume of the drum (15).

4. A mower in accordance with Claim 3, characterised in that the internal surface (49) of the uprights (35) is a curved surface.

5. A mower in accordance with one at least of Claims 1 to 4, characterised in that one at least of the connecting members (37, 38) is made up from the hub (39).

6. A mower in accordance with Claim 5, characterised in that the lower connecting member (38) is made up from the hub (39).

7. A mower in accordance with one at least of Claims 1 to 6, characterised in that in the region of the space forming play directly between the upper part of the rotating drum (15) and the connecting elements (3), the upper connecting member (37) forms a baffle (33) with said part (21, 26) of the connecting elements (3) penetrating into the inside of the drum (15).

8. A mower in accordance with one at least of Claims 1 to 7, characterised in that the front edge (62) or (66) of the uprights (35), taking account of the direction of rotation (61) or (64) of the drum (15), is equipped with a removable protecting piece (67).

9. A mower in accordance with Claim 8, characterised in that the protecting piece (67) surrounds the front edge (62) or (66) of the uprights (35).

10. A mower in accordance with Claim 9, characterised in that the protecting piece (67) comprises an external wing (68) which covers at least the part of the external surface (69) of the upright (35) situated in the neighbourhood of the front edge (62) or (66), and an internal wing (70) which covers at least the part of the internal surface (49) of the upright (35) situated in the neighbourhood of the front edge (62) or (66).

11. A mower in accordance with Claim 10, characterised in that the internal wing (70) of the protecting piece (67) approximately takes the shape of the part of the internal surface (49) of the upright (35) which it covers.

12. A mower in accordance with at least one of Claims 1 to 11, characterised in that one part at least of the uprights (35) is equipped with removable drivers (17; 171).

13. A mower in accordance with Claim 12 and one at least of Claims 8 to 11, characterised in that the driver (171) and the protecting piece (67) are made up from one single piece.

14. A mower in accordance with Claim 13, characterised in that the external surface (69) of the upright (35) which is equipped with a driver (17), has a groove (56) extending at least approximately parallel to the longitudinal axis (57) of the upright (35), in which the driver (17; 171) is partially housed.

15. A mower in accordance with one at least of Claims 12 to 14, characterised in that the front surface (53) or (54) of the driver (17; 171) is directed obliquely backwards, taking account of the direction of the rotation (61) or (64).

16. A mower in accordance with one at least of Claims 8 to 15, characterised in that the fixing elements (52) which fix the driver (17; 171) and/or the protecting piece (67) to the upright (35), are housed in a recess (55) of the driver (17; 171) and/or of the protecting piece (67) and are protected by the front surface (53) or (54) of the driver (17; 171) and/or of the protecting piece (67).

17. A mower in accordance with one at least of Claims 1 to 16, characterised in that the front edge (62) or (66) or the upright (35) is thicker than the central part (63) of said upright (35).

18. A mower in accordance with one at least of Claims 1 to 17, characterised in that the upright (35) is approximately symmetrical in relation to the plane containing its longitudinal axis (57) and the axis of rotation (13) of the drum (15).

19. A mower in accordance with Claim 12 or one at least of Claims 14 to 18 as dependant on Claim 12, characterised in that the driver (17) is approximately symmetrical in relation to the plane containing the axis of rotation (13) of the drum (15) and the longitudinal axis (57) of the upright (35).

20. A mower in accordance with one at least of Claims 8 to 19, characterised in that the driver (17; 171) and/or the protecting piece (67) extend approximately over the entire height of the drum (15).

21. A mower in accordance with one at least of Claims 1 to 20, characterised in that the cutter element (6, 8) is made up from at least two segments (46, 47) which are fixed in a removable manner to the lower connecting member (38) of the drum (15).

**Patentansprüche**

1. Mähmaschine (1) mit einem Rahmen (4), der über Verbindungsorgane (3) zumindest ein rotierendes, mit Schneidwerkzeugen (14) versehenes Schneidorgan (6, 8) trägt, über dem sich eine um eine aufrechtstehende Achse (13) rotierende Trommel (15) mit einem Mantel (34) befindet, wobei zumindest ein Teil (21, 26) der Verbindungsorgane (3) in das Innere der rotierenden Trommel (15) ragt, indem er deren Oberteil durchsetzt, wobei ein Spiel zulassender Spalt direkt zwischen diesem Oberteil der rotierenden Trommel (15) und den Verbindungsorganen (3) vorgesehen ist, und eine eine Welle (18, 30) und eine mit der Welle (18, 30) drehbar verbundene Nabe (39), auf der das Schneidorgan (6, 8) und die rotierende Trommel (15) befestigt sind, umfassende Antriebseinrichtung für das Schneidorgan (6, 8) und die Trommel (15), welche Welle (18, 30) und Nabe (39) zumindest teilweise in das Innere der Trommel (15) ragen, während der in die Trommel (15) ragende Teil (21, 26) der Verbindungsorgane (3) mit der Welle (18, 30) des Schneidorgans (6, 8) verbunden ist, dadurch gekennzeichnet, dass der Mantel (34) der rotierenden Trommel (15) aus voneinander durch Zwischenräume (36) getrennten und miteinander an ihrem Unterteil durch ein unteres Verbindungsteil (38) und an ihrem Oberteil durch ein oberes Verbindungsteil (37) verbundene Streben (35) gebildet ist.

2. Mähmaschine nach Anspruch 1, dadurch gekennzeichnet, dass die Breite der zwischen den Streben (35) ausgebildeten Zwischenräume (36) zumindest im wesentlichen gleich der Breite der Streben (35) ist.

3. Mähmaschine nach einem der Ansprüche 1 oder 2, dadurch gekennzeichnet, dass die Innenseite (49) der Streben (35) von einer konvexen Fläche gebildet ist, wobei das Zentrum (50) ihres umschriebenen Kreises (51) ausserhalb des Raumes der Trommel (15) liegt.

4. Mähmaschine nach Anspruch 3, dadurch gekennzeichnet, dass die Innenseite (49) der Streben (35) eine gekrümmte Fläche ist.

5. Mähmaschine nach zumindest einem der Ansprüche 1 bis 4, dadurch gekennzeichnet, dass zumindest eines der Verbindungsteile (37, 38) aus der Nabe (39) besteht.

6. Mähmaschine nach Anspruch 5, dadurch gekennzeichnet, dass das untere Verbindungsteil (38) von der Nabe (39) gebildet wird.

7. Mähmaschine nach zumindest einem der Ansprüche 1 bis 6, dadurch gekennzeichnet, dass das obere Verbindungsteil (37) im Bereich des Spiel zulassenden Spaltes direkt zwischen dem Oberteil der rotierenden Trommel (15) und den Verbindungsorganen (3) ein Ablenkelement (33) mit dem Teil (21, 26) der ins Innere der Trommel (15) ragenden Verbindungsorgane (3) bildet.

8. Mähmaschine nach zumindest einem der Ansprüche 1 bis 7, dadurch gekennzeichnet, dass die im Drehsinn (61) oder (64) der Trommel (15) vordere Kante (62) oder (66) der Streben (35) mit einem abnehmbaren Schutzstück (67) versehen ist.

9. Mähmaschine nach Anspruch 8, dadurch gekennzeichnet, dass das Schutzstück (67) die vordere Kante (62) oder (66) der Streben (35) umgibt.

10. Mähmaschine nach Anspruch 9, dadurch gekennzeichnet, dass das Schutzstück (67) einen äusseren Flügel (68), der zumindest den in der Nähe der vorderen Kante (62) oder (66) befindlichen Teil der Aussenseite (69) der Strebe (35) bedeckt, und einen inneren Flügel (70) aufweist, der zumindest den in der Nähe der vorderen Kante (62) oder (66) befindlichen Teil der Innenseite (49) der Strebe (35) bedeckt.

11. Mähmaschine nach Anspruch 10, dadurch gekennzeichnet, dass sich der innere Flügel (70) des Schutzstücks (67) im wesentlichen an die Form der Innenseite (49) der Strebe (35), die er bedeckt, anschmiegt.

12. Mähmaschine nach zumindest einem der Ansprüche 1 bis 11, dadurch gekennzeichnet, dass zumindest ein Teil der Streben (35) mit abnehmbaren Mitnehmern (17; 171) versehen ist.

13. Mähmaschine nach Anspruch 12 und zumindest einem der Ansprüche 8 bis 11, dadurch gekennzeichnet, dass der Mitnehmer (171) und das Schutzstück (67) aus einem einzigen Stück bestehen.

14. Mähmaschine nach Anspruch 13, dadurch gekennzeichnet, dass die Aussenseite (69) der Strebe (35), die mit einem Mitnehmer (17) versehen ist, eine Rille (56) aufweist, die im wesentlichen parallel zur Längsachse (57) der Strebe (35) verläuft, und in welche der Mitnehmer (17; 171) teilweise eingesetzt ist.

15. Mähmaschine nach einem der Ansprüche 12 bis 14, dadurch gekennzeichnet, dass die Vorderseite (53) oder (54) des Mitnehmers (17; 171) im Rotationssinn (61) oder (64) schräg nach hinten gerichtet ist.

16. Mähmaschine nach zumindest einem der Ansprüche 8 bis 15, dadurch gekennzeichnet, dass die Befestigungselemente (52), die den Mitnehmer (17; 171) und/oder das Schutzstück (67) auf der Strebe (35) fixieren, in einer Vertiefung (55) des Mitnehmers (17; 171) und/oder des Schutzstücks (67) untergebracht sind und durch die Vorderseite (53) oder (54) des Mitnehmers (17; 171) und/oder des Schutzstücks (67) geschützt sind.

17. Mähmaschine nach zumindest einem der Ansprüche 1 bis 16, dadurch gekennzeichnet, dass die Vorderkante (62) oder (66) der Strebe (35) dicker als der Mittelteil (63) der Strebe (35) ist.

18. Mähmaschine nach zumindest einem der Ansprüche 1 bis 17, dadurch gekennzeichnet, dass die Strebe (35) im wesentlichen symmetrisch in bezug auf die ihre Längsachse (57) und die Rotationsachse (13) der Trommel (15) enthaltende Ebene ist.

19. Mähmaschine nach Anspruch 12 oder zumindest einem der Ansprüche 14 bis 18 in ihrer Abhängigkeit vom Anspruch 12, dadurch gekennzeichnet, dass der Mitnehmer (17) im wesentlich symmetrisch in bezug auf die die Rotationsachse (13) der Trommel (15) und die Längsachse (57) der Strebe (35) enthaltende Ebene ist.

20. Mähmaschine nach zumindest einem der Ansprüche 8 bis 19, dadurch gekennzeichnet, dass der Mitnehmer (17; 171) und/oder das Schutzstück (67) im wesentlichen über die gesamte Höhe der Trommel (15) reichen.

21. Mähmaschine nach zumindest einem der Ansprüche 1 bis 20, dadurch gekennzeichnet, dass das Schneidorgan (6, 8) aus zumindest zwei Segmenten (46, 47) besteht, die lösbar am unteren Verbindungsteil (38) der Trommel (15) befestigt sind.

FIG.1

FIG.2

FIG.3

## FIG.4

## FIG.5